(19) Europäisches Patentamt
European Patent Office
Office européen des brevets

(11) Veröffentlichungsnummer : **0 118 089**
**B1**

(12) # EUROPÄISCHE PATENTSCHRIFT

(45) Veröffentlichungstag der Patentschrift : **10.09.86**

(51) Int. Cl.⁴ : **E 21 B 43/22**

(21) Anmeldenummer : **84101982.1**

(22) Anmeldetag : **24.02.84**

(54) **Verfahren zur Mobilitätskontrolle von Spalt-, Schlitz- oder Porenströmungen.**

(30) Priorität : **02.03.83 DE 3307252**

(43) Veröffentlichungstag der Anmeldung : **12.09.84 Patentblatt 84/37**

(45) Bekanntmachung des Hinweises auf die Patenterteilung : **10.09.86 Patentblatt 86/37**

(84) Benannte Vertragsstaaten : **AT DE FR GB NL**

(56) Entgegenhaltungen :
**EP-A- 0 055 200**
**EP-A- 0 091 086**
**EP-A- 0 097 926**
**WO-A-83 /015 83**
**DE-A- 2 831 100**
**FR-A- 2 458 671**
**GB-A- 1 504 789**
**US-A- 3 361 213**
**US-A- 4 193 452**
**JOURNAL OF COLLOID AND INTERFACE SCIENCE, Band 57, Nr. 3, Dezember 1976, Seiten 575-577, Academic Press. Inc., New York, US; S.GRAVSHOLT: "Viscoelasticity in highly dilute aqueous solutions of pure cationic detergents"**

(73) Patentinhaber : **HOECHST AKTIENGESELLSCHAFT**
**Postfach 80 03 20**
**D-6230 Frankfurt am Main 80 (DE)**

(72) Erfinder : **Haas, Raimund, Dr.**
**Johannesallee 20**
**D-6230 Frankfurt am Main 80 (DE)**
Erfinder : **Ohlendorf, Dieter, Dr.**
**Am Kühlen Grund 4**
**D-6237 Liederbach (DE)**
Erfinder : **Interthal, Werner, Dr.**
**Dr.-Ludwig-Opel-Strasse 62**
**D-6090 Rüsselsheim (DE)**

EP 0 118 089 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Es ist in der Technik oft erwünscht, Strömungen von Flüssigkeiten durch Spalte, Schlitze oder Porenräume zu verlangsamen oder zu kontrollieren. So wird z. B. angestrebt, die Leckageverluste durch Spalte in Hydrauliksystemen zu minimieren oder eine Verlangsamung von Sickerströmungen in Mülldeponien oder Baugruben zu erreichen, was einen erheblichen technischen Vorteil bedeuten kann. Bei der sogenannten tertiären Erdölforderung (Erdölintensivförderung) schließlich ist u. a. eine Mobilitätskontrolle der Flutbank, die das Erdöl aus den porösen Lagerstätten verdrängen soll, notwendig, um einen möglichst hohen Entölungsgrad zu erreichen. Es ist bekannt, daß die Verlangsamung dieser Spalt- oder Porenströmungen durch Zusätze erreicht werden kann, die die Scherviskosität des Flutmediums erhöhen. Insbesondere für die Erdölintensivförderung wurden bereits zahlreiche Verfahren beschrieben, die auf einer scherviskositätserhöhenden Wirkung der wäßrigen Flutfront beruhen. Zur Steigerung der Viskosität werden dabei vor allem hochpolymere lösliche Zusätze empfohlen (US-A-3 724 545).

Die mit Hochpolymeren verdickten Flüssigkeiten weisen jedoch in der Praxis eine Reihe von Nachteilen auf. So wird z. B. der viskositätserhöhende Effekt von Hochpolymeren in wäßrigen Lösungen stark durch die Temperatur und durch den Zusatz von Elektrolyten beeinflußt. Unter den Bedingungen der Erdöllagerstätten mit erhöhter Temperatur und Salinität des Lagerstättenwassers nimmt die verdickende Wirkung der Polymeren in der Regel rasch ab. Selbst wenn es jedoch gelingt, durch extrem hohe Konzentrationen an Polymer oder durch den Einsatz spezieller Polymeren im Flutwasser die geforderte Temperatur- und Elektrolytstabilität näherungsweise zu erreichen, so verlangsamen diese Zusätze jedoch gleichmäßig die Mobilität der Strömung in allen Porengebieten. Dies bedeutet, daß in den von der Einpreßsonde zur Fördersonde durchgebrochenen (Fingering) Fließkanälen im Porenraum nach wie vor der Hauptanteil des Flutwassers an den ölführenden Gebieten, wenn auch verlangsamt, vorbeifließt.

Speziell zur Vermeidung dieses Nachteils wurde in der EP-A 24012 vorgeschlagen, spezielle Polymermischungen zu verwenden, die nur an den Stellen einen drastisch erhöhten Fließwiderstand zeigen, an denen die Flutflüssigkeit zur Fördersonde hin durchbrechen will. Dieses Verfahren ist zwar ein wesentlicher Fortschritt, beseitigt aber nicht die Nachteile, die generell mit der Verwendung von Polymeren verbunden sind, wie etwa deren Temperatur- und Elektrolytempfindlichkeit und vor allem deren Scherempfindlichkeit. Infolge dieser Nachteile können die Polymere relativ leicht abgebaut und zerstört werden und verlieren somit rasch zumindest einen großen Teil ihrer verdickenden Wirkung.

Überraschenderweise wurde nun gefunden, daß man anstelle dieser Polymeren auch bestimmte kationische Verbindungen verwenden kann, die die Nachteile der Polymeren nicht zeigen. Diese kationischen Verbindungen erhöhen strömungsaktiv den Fließwiderstand des Flutmediums und beeinflussen somit im gewünschten Sinne dessen Mobilität.

Gegenstand der Erfindung ist somit ein Verfahren zur Mobilitätskontrolle von wäßrigen Spalt-, Schlitz- oder Porenströmungen, das dadurch gekennzeichnet ist, daß man dem wäßrigem Medium eine Verbindung der Formel

$$R_1—K^{\oplus}A^{\ominus}$$

zugibt,
wobei

$R_1$ $C_{12}$-$C_{26}$-Alkyl oder $C_{12}$-$C_{26}$-Alkenyl, $K^{\oplus}$ eine Gruppe der Formeln

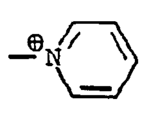

oder

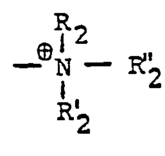

$R_2$ $C_1$-$C_3$-Alkyl, vorzugsweise Methyl, $R'_2$ $C_1$-$C_3$-Alkyl, vorzugsweise Methyl, $R''_2$ $C_1$-$C_3$-Alkyl, vorzugsweise Methyl oder $R''_2$ $(CH_2CH_2O)_xH$ mit x von 1 bis 3, vorzugsweise 1 bis 2 und $A^{\ominus}$ ein Anion der folgenden Formeln bedeutet : $SCN^{\ominus}$, $R_3SO_3^{\ominus}$, wo $R_3$ $C_6$-$C_9$-Alkyl oder Alkenyl ist und die Summe der C-Atome in $R_1$ und $R_3$ mindestens 21 betragen soll ;

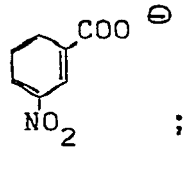 ; 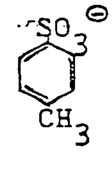 ; 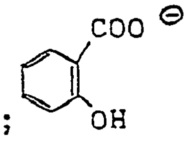 ; 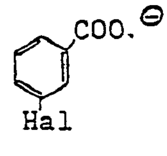 ; 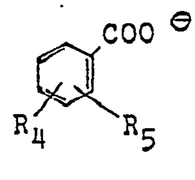

wo Hal Chlor oder Brom, $R_4$ $C_1$-$C_5$-Alkyl, $C_2$-$C_5$-Alkenyl oder $C_1$-$C_5$-Alkoxy in den Stellungen 3, 4, 5 und 6 und $R_5$ Wasserstoff oder Hydroxy in den Stellungen 2 und 3 zur Carboxyl-Gruppe und

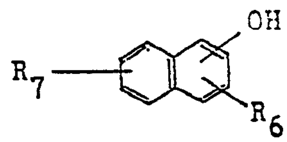

wo $R_6$ $COO^{\ominus}$ oder $SO_3^{\ominus}$ und $R_7$ Wasserstoff oder Methyl ist.

Besonders bevorzugt sind die Salze aus den folgenden Kationen und Anionen :

1. 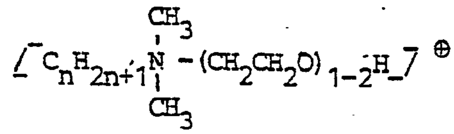

a) mit dem Anion $C_6H_{13}SO_3^{\ominus}$ für $20 \leq n \leq 26$
b) mit dem Anion $C_7H_{15}SO_3^{\ominus}$ für $14 \leq n \leq 22$
c) mit dem Anion $C_8H_{17}SO_3^{\ominus}$ für $14 \leq n \leq 20$
d) mit dem Anion $SCN^{\ominus}$ für $16 \leq n \leq 26$

2. 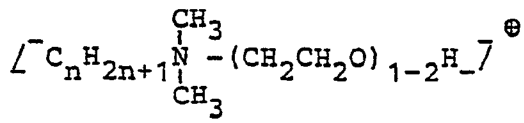

für $12 \leq n \leq 24$ mit folgenden Benzoesäureanionen

a) Salicylat oder m-Halogenbezoat

b) 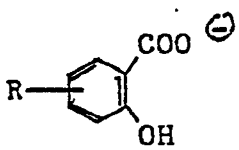

mit R = Methyl oder Ethyl oder Propyl
oder $C_nH_{2n+1}O$ — mit $1 \leq n \leq 4$,

vorzugsweise in den Stellungen 3 oder 4 oder 5 zur Carboxylgruppe.

c) 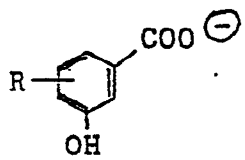

mit R = Methyl oder Ethyl oder Propyl
oder $C_nH_{2n+1}O$ — mit $1 \leq n \leq 4$,

vorzugsweise in den Stellungen 4 oder 5 zur Carboxyl-Gruppe.

d) 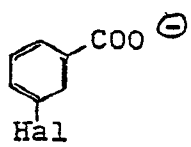
mit Hal = F, Cl, Br, J

e) 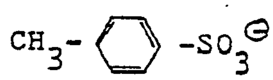

3. 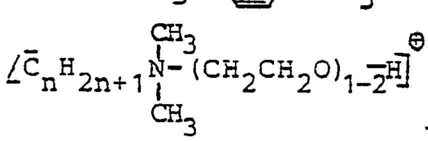 oder 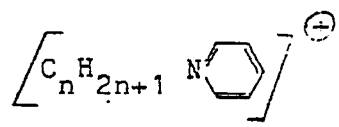

für $12 \leq n \leq 24$

mit den Anionen 2-hydroxy-1-naphthoat, 3-(oder 4)-hydroxy-2-naphthoat bzw. die entsprechenden Derivate der Naphthol-Sulfonsäuren.

Die Herstellung dieser quartären Ammoniumsalze kann auf folgenden Wegen erfolgen.

Man löst zunächst die Alkyl-trimethylammonium-halogenide bzw. Pyridinium- chloride, bromide oder auch — jodide in wasserfreien Lösungsmitteln wie z. B. Methanol auf und gibt frisch gefälltes, zuletzt mit Methanol gewaschenes Silberhydroxyd in leichtem Überschuß hinzu. So soll möglichst kein Wasser in das System eingebracht werden, da man sonst Schwierigkeiten mit der Kristallisation bekommt. Bei kurzem Anwärmen auf ca. 50° vollzieht sich die Bildung des Alkyltrimethyl-ammonium- bzw. Pyridiniumhydroxyds, das im Methanol gelöst bleibt.

Bei dieser Umsetzung verschwindet die braune Farbe des Silber-hydroxyds weitgehend und der resultierende Niederschlag nimmt die Farbe des Silberhalogenids an. Der Silberhalogenid-Niederschlag wird dann bei ca. 15 °C abgesaugt. Das im methanolischen Filtrat vorliegende Alkyltrimethylammonium- bzw. Pyridiniumhydroxyd kann durch Zugabe der stöchiometrischen Menge einer Carbonsäure, Sulfosäure oder anorgan. Säure neutralisiert werden. Durch Eindampfen des Methanols wird das gewünschte Alkyl-trimethylammoniumsalz bzw. Pyridiniumsalz gewonnen.

Noch einfacher ist es, zunächst die Silbersalze der betreffenden Carbonsäure herzustellen, die häufig wenig wasserlöslich sind. Man kann hier von Silberhydroxyd oder Silbercarbonat ausgehen und diese mit der gewünschten Carbonsäure neutralisieren. Man kann aber auch die Alkalicarboxylate in Wasser lösen und Silbernitrat-Lösung zugeben, wenn das Silbercarboxylat ausfällt. Man saugt ab, mischt und trocknet das Silbercarboxylat. Man kann dieses dann in der stöchiometrisch erforderlichen Menge zu einer Lösung des Alkyl-trimethylammonium- bzw. Pyridiniumhalogenids in einem wasserfreien Lösungsmittel wie Methanol geben und kurz auf 50 bis 60 °C erwärmen.

Auch hier wird hinterher bei 15 °C das Silberhalogenid abgesaugt und durch Eindampfen des Filtrats das gemischte Alkyl-trimethylammonium- bzw. Pyridiniumcarboxylat gewonnen. Eine weitere Reindarstellung kann durch Umkristallisieren aus prakt. wasserfreien Lösungsmitteln (Essigester, Aceton, Acetonitril, Dichlorethan) erfolgen.

Als weitere Möglichkeit ist auch die Gewinnung der Alkyltrimethylammonium- bzw. Pyridiniumhydroxyd-Lösung durch Behandlung der Alkyl-trimethylammonium- bzw. Pyridiniumhalogenide (oder anderer Salze) mit einem stark basischen Anionenaustauscher zu erwähnen, was ebenfalls in einem wasserfreien Lösungsmittel wie z. B. Methanol geschehen muß. Daran schließt sich wiederum die Neutralisation mit der gewünschten Carbonsäure an.

Die genannten Salze eignen sich zur Erhöhung des Fließwiderstandes von wäßrigen Medien in Spalt-, Schlitz- oder Poranströmungen. Sie werden zugegeben in Konzentrationen von 0,01 bis 5 Gew.-%, vorzugsweise 0,05 bis 0,5 Gew.-%, besonders bevorzugt 0,1 bis 0,5 Gew.-%, wobei jedoch für jedes Tensidsalz in Abhängigkeit von der Temperatur eine andere untere kritische Konzentrationsgrenze für eine ausreichende Wirksamkeit existiert, die, wie weiter hinten beschrieben, durch einfache Vorversuche bestimmt werden kann.

Die Wirkung als Fließwiderstandserhöher (FWE) ist außerdem abhängig von der Temperatur. Die aufgeführten Tensidsalze zeigen eine ausreichende Wirkung als FWE jeweils in einem Temperaturintervall $\Delta T = 40\,°C \pm 15\,°C$, wobei je nach Art der einzelnen Tensidsalze FWE-Wirkung in einem Gesamttemperaturbereich von 0 °C bis 140 °C erzielt werden kann. Ist das Tensid jedoch in Lösung, so kann die Löslichkeitstemperatur je nach Tensid entweder kurzzeitig, d. h. für einige Stunden oder für längere Zeit bis zu mehreren Wochen um 5-20 °C unterschritten werden. Die genannten Tensidsalze eignen sich auch als FWE in wäßrigen Mischungen mit Ethylenglykol, Polyalkylenoxiden oder Glyzerin. Zur Zumischung beispielsweise von Ethylenglykol kann damit eine FWE-Wirkung bei Temperaturen unterhalb von 0 °C erzielt werden. Die untere Temperaturgrenze für einen Einsatz als FWE ist bei allen Tensiden die Löslichkeitstemperatur.

Für die n-Alkyltrimethylammonium-salicylate wurden folgende Bereiche, in denen die optimale Wirksamkeit als FWE auftritt, gefunden :
n-Dodecyltrimethylammoniumsalicylat im Bereich 0,14 bis 1 Gew.-% von 5 bis 20 °C ; n-Tetradecyltrimethylammoniumsalicylat im Bereich von 0,04 bis 1 Gew.-% von 10 bis 45 °C ; n-Hexadecyltrimethylammoniumsalicylat im Bereich von 0,03 bis 1 Gew.-% von 20 bis 60 °C ; n-Octadecyltrimethylammoniumsalicylat im Bereich von 0,8 bis 1 Gew.-% von 40 bis 75 °C ; n-Docosyltrimethylammoniumsalicylat im Bereich von 0,02 bis 1 Gew.-% für Temperaturen ab 70 °C, insbesondere oberhalb 90 °C. Allgemein gilt, daß der Temperaturbereich, in dem eine ausreichende Wirkung als FWE vorliegt, mit jeder zusätzlichen $C_2H_4$-Gruppe um ca. 15 °C zu höheren Temperaturen hin verschoben wird. Bei Verwendung der Pyridiniumverbindungen liegt der bevorzugte Temperaturbereich um ca. 8-12 °C niedriger gegenüber den Trimethylammonium-Salzen gleicher Kettenlänge.

Ähnliche Abhängigkeiten ergeben sich für die entsprechenden p-Toluolsulfonate, nur daß die minimalen Einsatzkonzentrationen als FWE um einen Faktor 3 bis 7 größer sind als bei den Salicylaten gleicher Kettenlänge.

Für die n-Alkyltrimethylammoniumrhodanide und n-Alkylpyridiniumrhodanide ergeben sich ebenfalls ähnliche Abhängigkeiten wie bei den entsprechenden Salicylaten. So wurden z. B. folgende Bereiche optimaler Wirksamkeit als FWE gefunden : n-Hexadecyltrimethylammoniumrhodanid im Bereich von 0,03 Gew.% bis 1 Gew.% für 45 bis 65 °C ; n-Octadecyltrimethylammoniumrhodanid von 0,05 bis 1 Gew.-%

für 60 bis 80 °C ; n-Docosyltrimethylammoniumrhodanid von 0,03 bis 1 Gew.% für Temperaturen oberhalb 85 °C und n-Hexadecylpyridiniumrhodanid von 0,05 bis 1 Gew.-% für 40 bis 60 °C.

Der bevorzugte Temperatur- und Konzentrationsbereich wird aber nicht nur durch die Kettenlänge der n-Alkyltrimethylammonium- oder n-Alkylpyridiniumverbindung bestimmt, sondern auch durch die Art des Gegenions.

So zeigen z. B. die Verbindungen Hexadecyltrimethylammonium-3-(oder 4)-methylsalicylat oder Hexadecyltrimethyl-4-ethoxysalicylat in wässriger Lösung bei 40 °C bereits ab 0,01 Gew.-% bis 1 Gew.-% und oberhalb 65 °C im Konzentrationsbereich 0,05 bis 1 Gew.-% eine ausreichende Wirkung als FWE, während Hexadecyltrimethylammoniumsalicylat bei 30 °C ab 0,015 Gew.-% und oberhalb 70 °C nur bei Konzentrationen größer 0,8 Gew.-% eine Wirksamkeit aufweist.

Ganz allgemein zeigen die Verbindungen, n-Alkyltrimethyl-ammonium und n-Alkylpyridinium mit den Gegenionen

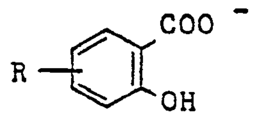

oder

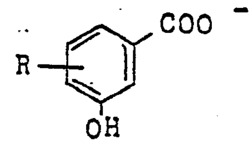

mit R = $C_1$-$C_5$ Alkyl oder $C_1$ bis $C_5$ Alkoxy mit zunehmender Kettenlänge von R eine Verschiebung der unteren Konzentrationsgrenze für eine Wirksamkeit als FWE zu kleineren Werten und gleichzeitig eine Ausweitung des Temperaturbereiches zu höheren Werten verglichen mit den entsprechenden reinen Salicylat-Verbindungen. Eine weitere Erhöhung des Temperaturbereiches, in dem eine Wirkung vorliegt, wird durch Verwendung der Tenside mit den Anionen

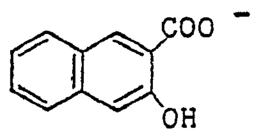

erreicht.

Beispielsweise zeigen die Verbindungen Hexadecyltrimethylammonium-3 (oder 4) hydroxy-2-naphthoat Wirksamkeit bei 50 °C im Konzentrationsbereich von 0,005 Gew.-% bis 1 Gew.-% und oberhalb 80 °C im Konzentrationsbereich von 0,025 Gew.-% bis 1 Gew.-%. Analoges gilt für die entsprechenden Pyridiniumverbindungen, nur daß die Temperaturbereiche im Mittel um ca. 5-15 °C nach unten verschoben sind. Analog zu den Salicylat-Verbindungen bewirkt auch bei den Hydroxynaphthoaten die Veränderung der Kettenlänge des n-Alkyltrimethylammonium- und n-Alkylpyridiniumkations eine Verschiebung des Temperaturbereiches für die FWE-Wirkung. Beispielsweise zeigen jeweils 1 000 ppm-Lösungen der Verbindungen n-$C_nH_{2n+1}$ trimethylammonium-3-hydroxy-2-naphthoat ab Temperaturen von 65-85 °C mit n = 18 auch oberhalb 105 °C, mit n = 20 auch oberhalb 115 °C und mit n = 22 auch oberhalb 125 °C Wirksamkeit. Ganz allgemein wird bei den n-Alkyltrimethylammonium- bzw. n-Alkylpyridinium-3-hydroxy-2-naphthoaten der wirksame Temperaturbereich um 20 bis 40 °C zu höheren Temperaturen hin erweitert im Vergleich zu den jeweiligen n-Alkyltrimethylammonium- bzw. n-Alkylpyridinium-salicylaten.

Bei den n-Alkyltrimethylammonium-n-alkyl-1-sulfonaten und n-Alkylpyridinium-n-alkyl-1-sulfonaten wird der Temperaturbereich und Konzentrationsbereich, in dem Wirksamkeit als FWE vorliegt, ebenfalls durch die Kettenlängen der Alkylgruppen sowohl beim Anion als auch beim Kation bestimmt.

Beispielsweise zeigt die Verbindung Tetradecyltrimethylammonium-heptan-1-sulfonat im Konzentrationsbereich von 0,02 bis 2 Gew.-% vorzugsweise 0,07 bis 0,5 Gew.-%, im Temperaturbereich von 5 °C bis 38 °C Wirksamkeit. Die Verbindung Hexadecyltrimethylammonium-heptan-1-sulfonat besitzt hingegen im Konzentrationsbereich von 0,02 bis 2 Gew.-%, vorzugsweise 0,07 bis 0,5 Gew.-% im Temperaturbereich von 10 °C bis 50 °C Wirksamkeit als FWE.

Eine weitere Erhöhung der Kettenlänge des n-Alkyltrimethylammonium- oder n-Alkylpyridinium-Kations bewirkt eine weitere Verschiebung des wirksamen Temperaturbereiches zu höheren Temperaturen. Beispielsweise zeigt die Verbindung n-Docosyltrimethylammonium-n-heptan-1-sulfonat im Konzentrationsbereich 0,1 bis 1 Gew.-% auch für Temperaturen oberhalb 75 °C noch FWE-Wirkung.

Im Vergleich zu den n-Heptan-1-sulfonaten besitzen die jeweils entsprechenden n-Octan-1-sulfonate Wirksamkeit als FWE in einem um 10 bis 30 °C höheren Temperaturbereich. Beispielsweise zeigt die Verbindung n-Tetradecyltrimethylammonium-n-octan-1-sulfonat im Konzentrationsbereich 0,2 bis 1 Gew.-% auch oberhalb 45 °C Wirksamkeit und die Verbindung n-Octadecyltrimethylammonium-n-octan-1-sulfonat im Konzentrationsbereich von 0,2 bis 1 Gew.-% auch oberhalb 85 °C noch Wirksamkeit. Allgemein bewirkt die Verlängerung der n-Alkylkette sowohl bei den Anionen als auch den Kationen eine Verschiebung des wirksamen Temperaturbereiches zu höheren Temperaturen hin.

Von allen genannten Tensiden eignen sich als FWE über 90 °C insbesondere die Salze $C_nH_{2n+1}K^{\oplus}$ $A^{\ominus}$, wobei $K^{\oplus}$ für die quartäre Stickstoffgruppe

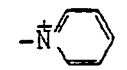 oder $-\overset{+}{N}(R)_3$

steht mit $R = -CH_3$ oder $-C_2H_5$ und $A^{\ominus}$ die folgenden Anionen beinhaltet:

1. für $n \geq 22$ Salicylat, 3-Halogen-benzoat mit Halogen = F, Cl, Br, J
2. für $n \geq 20$ 5 oder 6-Methyl-salicylat, Methoxy-salicylat, n-Octan-1-sulfonat
3. für $n \geq 18$ 3- oder 4-methyl-2- oder 3-hydroxybenzoat, 3- oder 4-ethoxy-2- oder 3-hydroxybenzoat, n-Nonan-1-sulfonat, 2-hydroxy-1-naphthoat
4. für $n \geq 16$ 3- oder 4-Alkyl-2- oder 3-hydroxybenzoat, mit Alkyl = $C_2$-$C_4$, 3- oder 4-Alkoxy-2- oder 3-hydroxybenzoat mit Alkyl = $C_3$-$C_5$ und 3- oder 4-Hydroxy-2-naphthoat.

Wirksam als FWE für Temperaturen über 100 °C sind insbesondere die Salze der Gruppe 4 für $n \geq 18$.

Weiter wurde gefunden, daß durch Erhöhung des pH-Wertes der wässrigen Lösung auf pH-Werte über 8, vorzugsweise auf pH = 9 bis 10,5, durch Zugabe von NaOH oder anderer Basen oder durch Zugabe von $Na_2CO_3$ oder anderer Salze, die den pH-Wert erhöhen, die Wirksamkeit als FWE entweder nicht beeinflußt wird, wie z. B. bei den Sulfonaten, oder wesentlich verbessert wird, wie z. B. bei den Hydroxybenzoaten und den davon abgeleiteten Verbindungen. Auch eine Absenkung des pH-Wertes mit HCl oder anderen starken Säuren auf pH-Werte unter 4,5 führt zu der gleichen Beeinflussung der FWE-Wirkung der Tenside.

Die Anwesenheit anderer Fremdelektrolyte führt zu keiner Beeinflussung, wie z. B. bei den Sulfonaten oder kann sogar die Wirkung verstärken wie z. B. bei den Hydroxybenzoaten und den davon abgeleiteten Verbindungen.

Als solche Fremdelektrolyse kommen in Frage beispielsweise schwache Säuren wie Essigsäure oder Ameisensäure und Salze, die aus den folgenden Ionen gebildet werden: Alkali-, Erdalkali-, Übergangsmetall-, Ammonium- oder Aluminium-Kationen; Halogenide, $ClO_3^{\ominus}$, $ClO_4^{\ominus}$, $BrO_3^{\ominus}$, $JO_3^{2\ominus}$, $S_2O_3^{2\ominus}$, $SO_4^{2\ominus}$, $S_2O_8^{2\ominus}$, $NO_2^{\ominus}$, $B_4O_7^{2\ominus}$, $NO_3^{\ominus}$, $PO_4^{3\ominus}$, $CO_3^{2\ominus}$, $CH_3COO^{\ominus}$, $CH_3COO^{\ominus}$, $C_2O_4^{2\ominus}$, $CN^{\ominus}$, $CrO_4^{2\ominus}$, $Cr_2O_7^{2\ominus}$. Die Menge dieser Fremdelektrolyte, die man der wässrigen Tensidlösung zugeben kann, ist nach oben begrenzt durch die Konzentration, bei der ein Aussalzeffekt für das Tensid auftritt verbunden mit einer Abnahme oder dem völligen Verschwinden der Wirksamkeit als FWE.

Die Wirkung der Fremdelektrolyte hängt auch ab von der Wertigkeit der Ionen und zwar verschiebt sich die Wirkung zu geringeren Konzentrationen gemäß folgendem Schema: 1-1-wertiger Elektrolyt < 2-1 wertiger Elektrolyt < 1-2-wertiger Elektrolyt < 2-2-wertiger Elektrolyt < 3-2-wertiger Elektrolyt < 2-3-wertiger Elektrolyt. Die Verbesserung der Wirksamkeit als Fließwiderstandserhöher bei den Hydroxybenzoaten und den daraus abgeleiteten Verbindungen ist besonders effektiv bei Zugabe eines Salzes, das gleichzeitig den pH-Wert auf pH $\geq$ 9,9 anhebt. So wirkt sich z. B. die Zugabe von $Na_2CO_3$ im Konzentrationsbereich 0,1 °C $\leq$ C $\leq$ 10 °C besonders positiv aus, wenn C die molare Konzentration des eingesetzten Tensids ist.

Anstelle der Zugabe von Salzen kann man auch so vorgehen, daß man das Halogensalz des kationischen Tensids $R_1K^{\oplus}$ $Hal^{\ominus}$, wie z. B.

$[C_nH_{2n+1}N(CH_3)_3]Hal$ oder 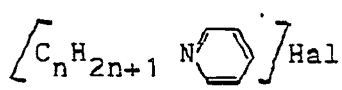

mit Hal = Cl, Br, J im molaren Verhältnis 1 : 1 mit einem Alkalisalz des Anions NaA, wie z. B. Na-n-alkyl-1-sulfonat, Na-hydroxy-benzoat und die davon abgeleiteteten Säureanionen oder wie z. B. Na-hydroxynaphthoat als FWE einsetzt. Die Wirkung ist dann gleich der Wirkung, die man mit den reinen Tensidsalzen unter Zusatz von Alkalihalogeniden erreicht. Auch Mischungen die vom molaren Verhältnis 1 : 1 abweichen, wie z. B. 1 : 2, zeigen noch Wirkung als FWE. Die maximale Wirksamkeit als Fließwiderstandserhöher ist auch von der Zeit abhängig, die verstrichen ist seit der Herstellung der wässrigen Tensidlösungen. Die Tensidlösungen zeigen zwar bereits sofort nach dem Ansetzen der Lösungen eine Wirkung, doch kann sich diese Wirkung während einer Woche noch deutlich ändern. Die Zeit, die benötigt wird, um eine optimale Wirkung zu erzielen, läßt sich für den Einzelfall unschwer durch einfache Versuche ermitteln. In den meisten Fällen wird die optimale Wirkung nach einer Woche erreicht. Eine Änderung oder Verbesserung der Wirkung tritt dann nicht mehr ein.

Von einigen Tensiden, wie z. B. dem Hexadecylpyridiniumsalicylat ist bekannt (H. Hoffmann et al., Ber. Bunsenges. Phys. Chem. *85* (1981) 255), daß sie ab einer ganz bestimmten, für jedes Tensid charakteristischen Konzentration, der $CMC_{II}$, große, nichtkugelförmige, meist stäbchenförmige Mizellen aus den einzelnen Tensidionen und Gegenionen aufbauen.

Überraschenderweise wurde nun gefunden, daß kationische Tenside in wässriger Lösung immer dann als FWE wirksam sind, wenn sie für Konzentrationen größer der $CMC_{II}$ nichtkugelförmige, vorzugsweise stäbchenförmige Mizellen ausbilden. Nichtkugelförmige, vorzugsweise stäbchenförmige Mizellen liegen vor, wenn bei der Untersuchung der Tensidlösung mit Hilfe der Methode der elektrischen Doppelbrechung mit gepulstem, rechteckförmigen elektrischen Feld (E. Fredericq und C. Houssier, Electric Dichroism and Electric Birefringence, Claredon Press, Oxford 1973 und H. Hoffmann et al., Ber.

Bunsenges. Phys. Chem. *85* (1981) 255) ein Meßsignal gefunden wird, aus dessen Abfall sich eine Relaxationszeit von $\tau \geq 0{,}01$ µs bestimmen läßt. Die untere Konzentrationsgrenze, ab der ein Tensid in wässriger Lösung als Fließwiderstandserhöher wirksam ist, wird daher immer durch die $CMC_{II}$ festgelegt. Die Bestimmung der $CMC_{II}$ ist z. B. durch Messung der elektrischen Leitfähigkeit der Tensidlösung in Abhängigkeit von der Tensidkonzentration möglich, wie bei H. Hoffmann et al. (Ber. Bunsenges. Phys. Chem. *85* (1981) 255) beschrieben. Es zeigte sich, daß der Wert der $CMC_{II}$ temperaturabhängig ist und sich mit zunehmender Temperatur zu höheren Tensidkonzentrationen verschiebt.

Zur Festlegung der Tensidkonzentration, die minimal notwendig ist, um eine ausreichende Wirkung als FWE in einem bestimmten Temperaturbereich zu erzielen, ist die Bestimmung der $CMC_{II}$ bei der Anwendungstemperatur mit Hilfe der elektrischen Leitfähigkeit ein geeigneter Vorversuch.

Die Untersuchung der genannten Tenside auf ihre Wirksamkeit zur Erhöhung des Fließwiderstandes von Flutungsmedien in porösen Medien oder ähnlichen Strömungsgeometrien erfolgte mit Hilfe der in DE-A-29 04 848 beschriebenen Apparatur, indem für die jeweilige wäßrige Lösung der Tenside der Druckabfall $\Delta P$ über die Strecke $\Delta L$ bei Durchströmen eines mit Feststoffpartikeln gefüllten Meßrohres mit dem Durchmesser D für verschiedene Filtergeschwindigkeiten V gemessen wurde. Aus diesen Werten lassen sich die dimensionslosen Größen, Reibungsbeiwert f und Reynoldzahl Re, berechnen, gemäß

$$f = \frac{\Delta P}{\delta V^2} \cdot \frac{d}{\Delta L} \cdot \frac{n^3}{(1 - n)}$$

$$Re = \frac{v \cdot d \cdot \delta}{\eta (1 - n)}$$

wobei δ die Dichte, η die dynamische Scherviskosität, d der mittlere Durchmesser der Feststoffpartikel und n die Volumenporosität der Schüttung bedeuten. Üblicherweise werden für und η jeweils die entsprechenden Werte des reinen Lösungsmittels, Wasser, eingesetzt. Aus den so erhaltenen Werten, f und Re, gewinnt man als Produkt dieser beiden Größen die Widerstandskennzahl

$$\Lambda = f \cdot Re,$$

die für die untersuchten Tensid-Lösungen in der üblichen doppelt-logarithmischen Auftragung gegen Re mit den entsprechenden Werten für reines Wasser verglichen wurde. Für die reine Wasserströmung durch ein poröses Medium ergibt sich eine Widerstandskennzahl $\Lambda_{H2O}$, die für $Re \leq 5$ unabhängig von der Reynoldszahl Re ist. Eine widerstandserhöhende Wirkung oder auch Dehnviskositätserhöhung liegt dann vor, wenn gilt: $\Lambda_{TL} - \Lambda_{H2O} > 0$, für Re = Konstant, wenn die relative Widerstandskennzahl $\Lambda_R = \Lambda_{TL}/\Lambda_{H2O}$ den Wert 1 übersteigt ($\Lambda_{TL}$ = Widerstandskennzahl der Tensidlösung).

Die genannten Tensidlösungen wirken als fließwiderstandserhöhende Zusätze in der Weise, daß die relative Widerstandskennzahl $\Lambda_R$ überhalb einer Einsatz-Reynoldszahl $Re_o$ mit ansteigender Reynoldszahl sehr schnell zunimmt, dann aber nach Überschreiten einer bestimmten Reynoldszahl $Re_{max}$, mit maximaler Widerstandserhöhung, wieder abnimmt. Der Grad der Wirksamkeit einer Tensidlösung als widerstands- oder dehnviskositätserhöhendes Medium soll im folgenden Text durch die Einsatz-Reynoldszahl $Re_o$ sowie maßgeblich durch die maximale relative Widerstandskennzahl $\Lambda_{R,max}$ gekennzeichnet werden; demnach weist eine Tensidlösung mit $\Lambda_{R,max} = 20$ eine bessere Wirksamkeit als fließwiderstandserhöhendes Medium auf als eine Tensidlösung mit $\Lambda_{R,max} = 10$.

Die Untersuchungen der Tensidlösungen ergaben nur dann reproduzierbare Ergebnisse, wenn die wäßrigen Lösungen der Tensidsalze vor den Messungen jeweils für ca. 1 Woche bei den Meßtemperaturen aufbewahrt wurden. Die Lösungen zeigen zwar auch sofort nach dem Ansetzen eine Wirkung als widerstandserhöhendes Medium, die sich jedoch im Verlauf einer Woche noch deutlich ändern kann.

Die so vorbehandelten Tenside wurden einer Vielzahl von Tests unterzogen. So ergab ein mehrmaliges Durchpressen derselben Tensidlösung wie aus Beispiel 2 ersichtlich, daß bei den aufgeführten Tensiden keine Abnahme ihrer fließwiderstandserhöhenden Wirkung durch mechanischen oder chemischen Abbau auftritt. Weiterhin zeigte sich, daß die fließwiderstandserhöhende Wirkung der genannten Tenside mit zunehmender Konzentration zunimmt, wobei die gleichzeitig auftretende Scherviskositätserhöhung bei zunehmender Tensidkonzentration, wie diese in einem herkömmlichen Viskosimeter ermittelt werden kann, im Vergleich zur fließwiderstandserhöhenden Wirkung in einem porösen Medium vernachlässigbar klein ist. Es zeigte sich auch, wie in Beispielen 5 und 6 dargestellt, daß eine Verringerung des mittleren Partikeldurchmessers der Schüttung zu niedrigen Einsatz-Reynoldzahlen bzw. niedrigen Einsatz-Filtergeschwindigkeiten des fließwiderstandserhöhenden Effektes führt, während der Maximalwert der erzielbaren Widerstandserhöhung konstant bleibt. Es wurde auch gefunden, daß die genannten fließwiderstandserhöhenden Effekte der Tensidlösungen einerseits in Schüttungen, hergestellt aus kugeligem Gleichkorn, in Schüttungen hergestellt aus kugeligem Korn mit breiter Partikeldurchmesserverteilung, andererseits in Sandpackungen hergestellt aus kantigem Kornmaterial mit enger oder breiter Durchmesserverteilung auftreten.

Die durchgeführten Untersuchungen zeigen, daß sich die genannten Tensid-Salze als Fließwiderstandserhöher überall dort eignen, wo wäßrige Strömungen durch Spalte, Schlitze oder Porenräume

kontrolliert und/oder verlangsamt werden sollen. Insbesondere kann durch den Einsatz der Tensid-Salze bei der Erdölintensivförderung (tertiäre Erdölförderung) das gefürchtete Ausfingern (« Fingering ») der Flutfront mit nachfolgendem Durchbruch zur Fördersonde verhindert und somit die Erdölausbeute gesteigert werden.

Zur Erzielung einer optimalen Wirkung als FWE sollten bei der Erdölintensivförderung die verdünnten wäßrigen Lösungen der Tensid-Salze eine bis mehrere Stunden vor der Anwendung in z. B. Vorratstanks durch Rühren und gegebenenfalls durch Erwärmen angesetzt werden, bevor die Lösungen in der üblichen Weise durch Pumpen in die Lagerstätte eingepreßt werden. Auch eine Lagerung der verdünnten Lösungen in den Vorratstanks über Tage bis Wochen ohne Abnahme der Wirksamkeit ist möglich, solange die Löslichkeitstemperatur des jeweiligen Tensid-Salzes nicht deutlich unterschritten wird.

Beispiel 1

Es wurde eine Konzentrationsreihe von 300, 500, 750, 1 000, 1 500, 2 000 und 3 000 Gew.-ppm von Hexadecyltrimethylammonium-Salicylat (im folgenden abgekürzt durch ($C_{16}$ TA-Sal) in E-Wasser angesetzt, indem die entsprechenden Gewichtsmengen von 0,9 ; 1,5 ; 2,25 ; 3,0 ; 4,5 ; 6,0 und 9,0 g $C_{16}$TA-Sal auf 3 000 g E-Wasser eingewogen wurden. Nach dem Auflösen unter Rühren bei Raumtemperatur wurden die Lösungen kurz auf ca. 90 °C erhitzt und nach dem Abkühlen auf 40 °C für 1 Woche bei dieser Temperatur ohne zu Rühren aufbewahrt.

Die Untersuchung auf Fließwiderstandserhöhung erfolgte anschließend in einer Porentströmungsapparatur (Patentschrift DE 29 04 848), indem eine Flüssigkeitsmenge von 2 500 $cm^3$ aus einem druckbeaufschlagten Vorratsbehälter durch das mit Feststoffpartikeln gefüllte Meßrohr gepreßt wurde. Der Durchfluß wurde über ein regelbares Ventil am Ende der Meßstrecke gesteuert und durch Bestimmung des ausfließenden Volumens pro Zeiteinheit gemessen, so daß bei gleichzeitiger Messung des Druckverlustes entlang der Porenmeßstrecke die Durchflußcharakteristik des Porenkörpers ermittelt werden konnte. Der Durchmesser des Meßrohres betrug D = 25 mm, die Gesamtlänge des Meßrohres L = 18,9 mm, die Meßlänge zur Bestimmung des Druckverlustes $\Delta$ L = 8,9 mm und die Anlauflänge zur ersten Druckmeßbohrung $L_A$ = 5 mm.

Der Porenkörper stellt eine Zufallschüttung aus engfraktionierten Glaskugeln mit einem Partikeldurchmesser d = 195 µm dar. In Tabelle 1 sind die Ergebnisse durch Wiedergabe der Einsatz-Reynoldzahl $Re_0$, der maximalen relativen Widerstandskennzahl $\Lambda_{R,max}$ und des zugehöhrigen $Re_{max}$-Wertes zusammengefaßt.

Beispiel 2

Es wurde eine Lösung $C_{16}$TA-Sal in E-Wasser mit c = 300 ppm hergestellt, wie in Beispiel 1 beschrieben, und in der Porenströmungsapparatur mit d = 195 µm bei T = 40 °C untersucht. Die durch die Meßstrecke gepreßte Lösung wurde mehrmals erneut in der Porenströmungsapparatur auf Widerstandserhöhung untersucht. Wie aus Tabelle 2 zu entnehmen ist, tritt auch nach 5-maligem Durchfließen des gleichen Lösungsvolumens durch den Porenkörper immer noch die gleiche widerstandserhöhende Wirkung auf, wobei sich die Fließkurven der einzelnen Meßreihen nahezu decken.

Beispiel 3

Eine Lösung $C_{16}$TA-Sal in E-Wasser mit c = 300 ppm wurde wie in Beispiel 1 angesetzt und in der Porenströmungsapparatur bei T = 40 °C vermesen, wobei der Glaskugeldurchmesser der Zufallsschüttung d = 392 µm betrug. Das Meßergebnis ist in Tabelle 3 im Vergleich zu den Werten für d = 195 µm angegeben.

Beispiel 4

Lösungen von $C_{16}$TA-Sal in E-Wasser mit den Konzentrationen 300, 500, 750, 1 000, 2 000 und 3 000 ppm wurden hergestellt, wie in Beispiel 1 beschrieben, jedoch bei T = 50 °C temperiert und in der Porenmeßstrecke mit d = 392 µm auf ihre Wirksamkeit zur Widerstandserhöhung untersucht. Die Meßergebnisse sind in Tabelle 4 zusammengefaßt.

Beispiel 5

Lösungen von $C_{16}$TA-Sal in E-Wasser mit den Konzentrationen c = 750 ppm und 1 000 ppm wurden, wie in Beispiel 1 beschrieben, hergestellt, bei T = 55 °C temperiert und in der Porenmeßstrecke mit d = 195 µm untersucht. Die Meßergebnisse sind in Tabelle 5 zusammengefaßt.

Beispiel 6

Die in Beispiel 5 verwendeten Tensidlösungen wurden bei T = 55° in der Porenmeßstrecke mit

d = 100 µm untersucht. Die fließwiderstandserhöhende Wirkung ist in Tabelle 6 dargestellt. Vergleicht man die Ergebnisse mit denen aus Beispiel 5, so findet man für unterschiedliche Partikeldurchmesser d jedoch gleicher Tensidkonzentration nahezu die gleichen Widerstandserhöhungen.

## Beispiel 7

Lösungen von $C_{16}$TA-Sal in E-Wasser mit den Konzentrationen c = 500 ppm und 750 ppm wurden, wie in Beispiel 1 beschrieben, hergestellt, bei T = 55 °C temperiert und in der Porenmeßstrecke untersucht, wobei der Porenkörper aus Valentin-Busch-Quarzsand (d = 30-150 µm, scharfkantig) bestand. Die Meßergebnisse sind in Tabelle 7 zusammengefaßt.

## Beispiel 8

Lösungen von $C_{16}$-TA-Sal in E-Wasser mit den Konzentrationen wie in Beispiel 1 wurden hergestellt, bei T = 60 °C temperiert und anschließend in der Porenmeßstrecke mit d = 195 µm bei gleicher Temperatur auf ihre Wirksamkeit als FWE untersucht. Die Meßergebnisse sind in Tabelle 8 aufgelistet. Es zeigt sich ein fließwiderstandserhöhender Effekt bei einer Tensidkonzentration von $c \geqslant 750$ ppm.

## Beispiel 9

Lösungen von $C_{16}$TA-Sal in E-Wasser mit c = 750 ppm wurden, wie in Beispiel 1 beschrieben, angesetzt und zusätzlich folgende Konzentrationen an NaCl (in mol/l) zugegeben :

$0 ; 1,78 \cdot \overline{10^{3}} ; 1,0 \cdot \overline{10^{2}} ; 1,0 \cdot \overline{10^{1}} ; 1,0.$

Die Temperierung erfolgte bei T = 55 °C.

Anschließend wurden diese Lösungen in der Porenströmungsapparatur mit d = 195 µm bei gleicher Temperatur untersucht. Die Ergebnisse sind in Tabelle 9 zusammengefaßt. Eine deutliche Verbesserung der Wirkung als FWE gegenüber der reinen 750 ppm $C_{16}$TA-Sal Lösung in E-Wasser tritt bei NaCl-Konzentrationen im Bereich kleiner als 0,1 mol/l auf, wie aus Tabelle 9 ersichtlich ist.

## Beispiel 10

Wie in Beispiel 1 beschrieben, wurden wäßrige Lösungen mit einem Gehalt von 750 ppm $C_{16}$TA-Sal angesetzt und mit den folgenden Konzentrationen an $CaCl_2$ (in mol/l) versehen :

$0 ; 1,0 \cdot \overline{10^{3}} ; 1,0 \cdot \overline{10^{2}} ; 1,0 \cdot \overline{10^{1}}.$

Eine deutliche Verbesserung der Wirksamkeit als FWE gegenüber reiner 750 ppm $C_{16}$TA-Sal Lösung in Wasser tritt bei $CaCl_2$-Konzentration kleiner als 0,1 mol/l auf, wie aus Tabelle 10 ersichtlich ist.

## Beispiel 11

Es wurden vier Lösungen von Tetradecyltrimethylammonium-Salicylat (im folgenden abgekürzt durch $C_{14}$TA-Sal) in E-Wasser mit c = 750 ppm angesetzt, indem jeweils die Gewichtsmengen von 2,25 g $C_{14}$TA-Sal auf 3 000 g E-Wasser eingewogen wurden. Nach dem Auflösen unter Rühren bei Raumtemperatur wurden die Lösungen kurz auf ca. 90 °C erhitzt und anschließend in separaten Temperierungseinrichtungen auf T = 25, 30, 35 und 45 °C abgekühlt und für 1 Woche bei den entsprechenden Temperaturen ohne zu Rühren aufbewahrt.

Die Untersuchung auf Fließwiderstandserhöhung dieser Lösungen erfolgte anschließend in der Porenströmungsapparatur wie in Beispiel 1 beschrieben, wobei der Glaskugeldurchmesser d = 195 µm betrug und die Tensidlösungen bei den entsprechenden Temperaturen vermessen wurden.

In Tabelle 11 sind die Ergebnisse durch Wiedergabe der Einsatz-Reynoldszahl $Re_0$, der maximalen relativen Widerstandskennzahl $\Lambda_{R,max}$ und des zugehörigen $Re_{max}$-Wertes zusammengefaßt.

## Beispiel 12

Wie in Beispiel 11 beschrieben wurden wäßrige Lösungen mit einem Gehalt von 750 ppm $C_{14}$TA-Sal angesetzt und mit den folgenden Konzentrationen an $Na_2CO_3$ (in mol/l) versehen :

$0 ; 1,78 \cdot \overline{10^{3}} ; 1,0 \cdot \overline{10^{2}}.$

Eine geringfügige Verbesserung der Wirksamkeit als FWE gegenüber einer reinen 750 ppm $C_{14}$TA-Sal Lösung in Wasser tritt bei der gewählten $Na_2CO_3$-Konzentration $1,78 \cdot \overline{10^{3}}$ auf, während bei $1,0 \cdot \overline{10^{2}}$ mol/l $Na_2CO_3$ eine vergleichsweise niedrigere Wirkung beobachtet wird.

Beispiel 13

Eine wäßrige Lösung an Tetradecyltrimethylammonium-heptan-1-sulfonat ($C_{14}$TA-heptan-1-sulfonat) mit c = 1 000 ppm wurde durch Einwiegen der Salze $C_{14}$TA-Cl und Na-heptan-1-sulfonat im molaren Mischungsverhältnis 1 : 1 hergestellt, wie in Beispiel 1 beschrieben, und bei Raumtemperatur T = 22 °C temperiert und anschließend in der Porenströmungsapparatur (d = 275 µm) bei gleicher Temperatur auf Fließwiderstandserhöhung untersucht. Hierbei zeigte sich eine deutliche Widerstandserhöhung, wobei $Re_0$ = 0,6, $Re_{max}$ = 2,0 und $\Lambda_{R,max}$ = 10 betrugen.

Beispiel 14

Eine wäßrige Lösung an Cetylpyridinium-Salicylat mit c = 500 ppm wurde durch Einwiegen der Salze Cetylpyridiniumchlorid und Natriumsalicylat im molaren Mischungsverhältnis 1 : 1 hergestellt, wie in Beispiel 1 beschrieben und bei T = 25 °C temperiert. Anschließend wurde die Lösung bei gleicher Temperatur in der Porenströmungsapparatur mit d = 392 µm auf Fließwiderstandserhöhung untersucht. Die Einsatz-Reynoldszahl lag bei $Re_0$ 0,001, $Re_{max}$ betrug 0,02 und $\Lambda_{R,max}$ = 50. Bei c = 100 ppm betrugen die Werte $Re_0$ = 0,1, $Re_{max}$ = 0,8 und $\Lambda_{R,max}$ = 3,75.

Beispiel 15

Es wurde eine wäßrige Lösung von n-Hexadecyltrimethylammonium-3-oxy-4-methyl-benzoat, wie in Beispiel 1 beschrieben, mit c = 1 000 ppm angesetzt und bei Raumtemperatur (T = 23 °C) auf Fließwiderstandserhöhung untersucht. Die Einsatz-Reynoldszahl ergab sich zu $Re_0$ = 0,0001, $Re_{max}$ = 0,03 und die maximale relative Widerstandskennzahl $\Lambda_{R,max}$ = 150.

Beispiel 16

Es wurde eine wäßrige Lösung von n-Hexadecyldimethyloxethylammonium-Salicylat, wie in Beispiel 1 beschrieben, mit c = 2 120 ppm angesetzt und bei T = 25 °C in der Porenströmungsapparatur mit d = 392 µm auf Fließwiderstandserhöhung untersucht. Die Einsatz-Reynoldszahl ergab sich zu $Re_0$ = 0,002, $Re_{max}$ = 0,01 und die maximale relative Widerstandskennzahl $\Lambda_{R,max}$ = 160.

Tabelle 1

Glaskugelschüttung

$C_{16}$TA-Sal d = 195 µm

| T(°C) | Konzentration (ppm) | $Re_o$ | $Re_{max}$ | $\Lambda_{R,max}$ |
|---|---|---|---|---|
| 40 | 300 | 0,09 | 0,35 | 13,0 |
| 40 | 500 | 0,05 | 0,25 | 31,8 |
| 40 | 750 | 0,03 | 0,15 | 56,5 |

Tabelle 2

$C_{16}$TA-Sal T = 40 °C c = 300 ppm d = 195 µm

| Versuch | $Re_o$ | $Re_{max}$ | $\Lambda_{R,max}$ |
|---|---|---|---|
| Frische Lösung 1. Versuch | 0,085 | 0,35 | 12,1 |
| Beanspruchte Lösung 2. Versuch | 0,085 | 0,35 | 11,7 |

Tabelle (Fortsetzung)

| Versuch | $Re_o$ | $Re_{max}$ | $\Lambda_{R,max}$ |
|---|---|---|---|
| 3. Versuch | 0,090 | 0,35 | 11,7 |
| 4. Versuch | 0,085 | 0,35 | 12,1 |
| 5. Versuch | 0,085 | 0,35 | 12,1 |

Tabelle 3

$C_{16}$TA-Sal  T = 40 °C  c = 300 ppm

| Kugeldurchmesser (μm) | $Re_o$ | $Re_{max}$ | $\Lambda_{R,max}$ |
|---|---|---|---|
| 195 | 0,09 | 0,35 | 12,1 |
| 392 | 0,21 | 0,60 | 11,8 |

Tabelle 4

Glaskugelschüttung
d = 392 μm

$C_{16}$TA-Sal in E-Wasser

| T(°C) | Konzentration (ppm) | $Re_o$ | $Re_{max}$ | $\Lambda_{R,max}$ |
|---|---|---|---|---|
| 50 | 300 | 1,30 | 3,5 | 3,8 |
| 50 | 500 | 0,80 | 1,8 | 11,1 |
| 50 | 750 | 0,55 | 1,3 | 17,2 |
| 50 | 1000 | 0,40 | 0,9 | 33,4 |
| 50 | 1500 | 0,40 | 0,8 | 55,6 |

Tabelle 5

Glaskugelschüttung
d = 195 μm

$C_{16}$TA-Sal in E-Wasser

| T(°C) | Konzentration (ppm) | $Re_o$ | $Re_{max}$ | $\Lambda_{R,max}$ |
|---|---|---|---|---|
| 55 | 750 | 0,45 | 1,0 | 7,1 |
| 55 | 1000 | 0,31 | 0,8 | 14,1 |

Tabelle 6

Glaskugelschüttung
d = 100 μm

$C_{16}$TA-Sal in E-Wasser

| T(°C) | Konzentration (ppm) | $Re_o$ | $Re_{max}$ | $\Lambda_{R,max}$ |
|---|---|---|---|---|
| 55 | 750 | 0,14 | 0,34 | 7,2 |
| 55 | 1000 | 0,11 | 0,30 | 13,3 |

Tabelle 7

Valentin-Busch-Quarzsand-schüttung d = 30-150 µm

$C_{16}$TA-Sal in E-Wasser

| T(°C) | Konzentration (ppm) | $Re_o$ | $Re_{max}$ | $\Lambda_{R,max}$ |
|---|---|---|---|---|
| 55 | 500 | 0,25 | 0,50 | 2,7 |
| 55 | 750 | 0,17 | 0,38 | 7,9 |

Tabelle 8

Glaskugelschüttung d = 195 µm

$C_{16}$TA-Sal in E-Wasser

| T(°C) | Konzentration (ppm) | $Re_o$ | $Re_{max}$ | $\Lambda_{R,max}$ |
|---|---|---|---|---|
| 60 | 300 | - | - | 1 |
| 60 | 500 | - | - | 1 |
| 60 | 750 | 3,0 | 4,0 | 1,6 |
| 60 | 1000 | 1,5 | 2,4 | 5,8 |
| 60 | 1500 | 0,9 | 1,9 | 11,3 |
| 60 | 2000 | 0,5 | 1,9 | 22,4 |
| 60 | 3000 | 0,4 | 1,4 | 42,6 |

Tabelle 9

R = 55 °C D = 195 µm

$C_{16}$TA-Sal c = 750 ppm

| NaCl-Konzentration mol/l | $Re_o$ | $Re_{max}$ | $\Lambda_{R,max}$ |
|---|---|---|---|
| 0 | 0,45 | 1,0 | 9,7 |
| $1,78 \cdot 10^{-3}$ | 0,40 | 1,1 | 14,7 |
| $1,00 \cdot 10^{-2}$ | 0,26 | 0,9 | 23,1 |
| $1,00 \cdot 10^{-1}$ | - | - | 1 |
| $1,0 \cdot 10^{0}$ | - | - | 1 |

Tabelle 10

T = 55 °C d = 195 µm

$C_{16}$TA-Sal c = 750 ppm

| $CaCl_2$-Konzentration mol/l | $Re_o$ | $Re_{max}$ | $\Lambda_{R,max}$ |
|---|---|---|---|
| 0 | 0,45 | 1,0 | 9,7 |
| $1,0.10^{-3}$ | 0,20 | 0,7 | 16,81 |
| $1,00.10^{-2}$ | 0,35 | 1,2 | 17,6 |
| $1,0.10^{-1}$ | – | – | 1 |

Tabelle 11

Glaskugelschüttung
d = 195 µm

$C_{14}$TA-Sal in E-Wasser

| T(°C) | Konzentration (ppm) | $Re_o$ | $Re_{max}$ | $\Lambda_{R,max}$ |
|---|---|---|---|---|
| 25 | 750 | 0,06 | 0,35 | 27,9 |
| 30 | 750 | 0,16 | 0,60 | 18,9 |
| 35 | 750 | 0,40 | 1,00 | 12,5 |
| 45 | 750 | – | – | 1 |

Tabelle 12

T = 25 °C d = 195 µm

$C_{14}$TA-Sal c = 750 ppm

| $Na_2CO_3$-Konzentration mol/l | $Re_o$ | $Re_{max}$ | $\Lambda_{R,max}$ |
|---|---|---|---|
| 0 | 0,06 | 0,35 | 29,9 |
| $1,78.10^{-3}$ | 0,05 | 0,4 | 30,6 |
| $1,00.10^{-2}$ | 0,30 | 1,0 | 15,0 |

**Patentansprüche**

1. Verfahren zur Mobilitätskontrolle wäßriger Spalt-, Schlitz- oder Porenströmungen, dadurch gekennzeichnet, daß man dem wäßrigen Medium kationische Tenside zugibt, die in reinen wäßrigen Lösungen bei der Messung der elektrischen Doppelbrechung mit gepulstem, rechteckförmigen elektrischen Feld ein Meßsignal aufweisen, aus dessen Abfall sich eine Relaxationszeit von 0,01 µs bis 10 ms, insbesondere von 0,1 µs-2 ms ergibt, und zwar in einer Konzentration oberhalb der $CMC_{II}$.

2. Verfahren nach Anspruch 1, dadurch gekennzeichnet, daß man dem wäßrigen Medium eine Verbindung der Formel

$$R_1—K^{\oplus}A^{\ominus}$$

zugibt,
wobei $R_1$ $C_{12}$-$C_{26}$-Alkyl oder $C_{12}$-$C_{26}$-Alkenyl, $K^{\oplus}$ eine Gruppe der Formeln

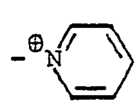

oder

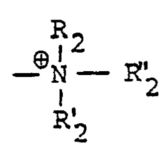

$R_2$ $C_1$-$C_3$-Alkyl, vorzugsweise Methyl, $R'_2$ $C_1$-$C_3$-Alkyl, vorzugsweise Methyl, $R''_2$ $C_1$-$C_3$-Alkyl,

vorzugsweise Methyl oder $R''_2$ $(CH_2CH_2O)_xH$ mit x von 1 bis 3, vorzugsweise 1 bis 2 und $A^{\ominus}$ ein Anion der folgenden Formeln bedeutet : $SCN^{\ominus}$, $R_3SO_3^{\ominus}$, wo $R_3$ $C_6$-$C_9$-Alkyl oder Alkenyl ist und die Summe der C-Atome in $R_1$ und $R_3$ mindestens 21 betragen soll ;

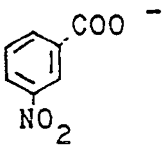 ; 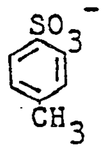 ; 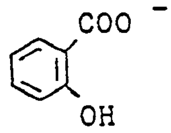 ; 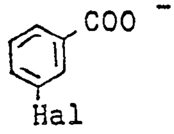 ; 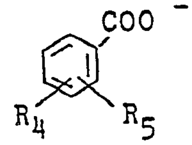

wo Hal Chlor oder Brom, $R_4$ $C_1$-$C_5$-Alkyl, $C_2$-$C_5$-Alkenyl oder $C_1$-$C_5$-Alkoxy in den Stellungen 3, 4, 5 und 6 und $R_5$ Wasserstoff oder Hydroxy in den Stellungen 2 und 3 zur Carboxyl-Gruppe und

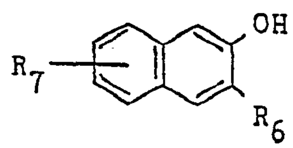

wo $R_6$ $COO^{\ominus}$ oder $SO_3^{\ominus}$ und $R_7$ Wasserstoff oder Methyl ist.

3. Verfahren nach Anspruch 1, dadurch gekennzeichnet, daß man die Verbindungen in einer Menge von 0,01 bis 5 Gew.-% zugibt.

4. Verfahren nach Anspruch 1, dadurch gekennzeichnet, daß zusätzlich noch Alkali-, Erdalkali-, Übergangsmetall-, Ammonium- oder Aluminium-Salze anwesend sind.

5. Verfahren nach Anspruch 1, zur Mobilitätskontrolle des Flutwassers bei der tertiären Erdölförderung.

**Claims**

1. A method of controlling the mobility of an aqueous flow through fissures, slits or pores, which comprises adding to the aqueous medium cationic surfactants which, on measurement of the electric birefringence with a pulsed, rectangular electrical field in a pure aqueous solution in a concentration above the $CMC_{II}$ gives a measurement signal, from the decrease of which a relaxation time of 0.01 µs to 10 ms, in particular of 0.1 µs-2 ms, results.

2. The method as claimed in claim 1, wherein a compound of the formula

$$R_1{-}K^+A^-$$

in which $R_1$ denotes $C_{12}$-$C_{26}$-alkyl or $C_{12}$-$C_{26}$-alkenyl, $K^+$ denotes a group of the formula

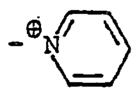 or 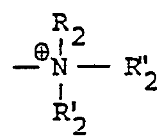

$R_2$ denotes $C_1$-$C_3$-alkyl, preferably methyl, $R'_2$ denotes $C_1$-$C_3$-alkyl, preferably methyl, $R''_2$ denotes $C_1$-$C_3$-alkyl, preferably methyl, or $R''_2$ denotes $(CH_2CH_2O)_xH$, where x denotes from 1 to 3, preferably 1 to 2, and $A^-$ denotes an anion of the following formula : $SCN^-$, $R_3SO_3^-$, where $R_3$ is $C_6$-$C_9$-alkyl or -alkenyl and the sum of the carbon atoms in $R_1$ and $R_3$ should be at least 21 ;

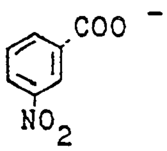 ; 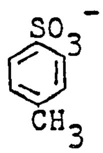 ; 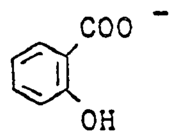 ; 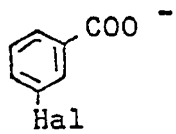 ; 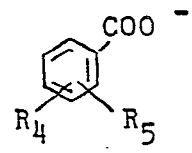

where Hal is chlorine or bromine, $R_4$ is $C_1$-$C_5$-alkyl, $C_2$-$C_5$-alkenyl or $C_1$-$C_5$-alkoxy in positions 3, 4, 5 and 6 and $R_5$ is hydrogen or hydroxyl in positions 2 and 3 relative to the carboxyl group, or

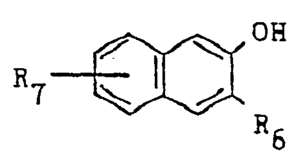

where $R_6$ is $COO^-$ or $SO_3^-$ and $R_7$ is hydrogen or methyl, is added to the aqueous medium.

3. The method as claimed in claim 1, wherein the compound is added in an amount of 0.01 to 5 % by weight.

4. The method as claimed in claim 1, wherein an alkali metal salt, alkaline earth metal salt, transition metal salt, ammonium salt or aluminium salt is also additionally present.

5. The method as claimed in claim 1, for controlling the mobility of the flooding water in tertiary production of crude oil.

**Revendications**

1. Procédé pour réguler la mobilité d'écoulements aqueux à travers des fentes, rainures ou pores, caractérisé en ce qu'on ajoute au fluide aqueux des surfactifs cationiques qui, dans des solutions aqueuses pures, lors de la mesure de la biréfringence électrique avec un champ électrique rectangulaire pulsé, présentent un signal de mesure à partir de la décroissance duquel on obtient un temps de relaxation de 0,01 µs à 10 ms, en particulier de 0,1 µs-2 ms, et ce, pour une concentration supérieure à la $CMC_{II}$.

2. Procédé selon la revendication 1, caractérisé en ce qu'on ajoute au fluide aqueux un composé de formule

$$R_1—K^{\oplus}A^{\ominus}$$

dans laquelle $R_1$ est un radical alkyle en $C_{12}$-$C_{26}$ ou alcényle en $C_{12}$-$C_{26}$, $K^{\oplus}$ est un groupe de formules

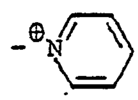

ou

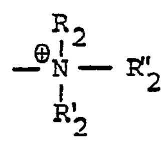

$R_2$ est un radical alkyle en $C_1$-$C_3$, de préférence le radical méthyle, $R'_2$ est un radical alkyle en $C_1$-$C_3$, de préférence le radical méthyle, $R''_2$ est un radical alkyle en $C_1$-$C_3$, de préférence le radical méthyle, ou bien $R''_2$ est $(CH_2CH_2O)_xH$, x valant de 1 à 3, de préférence 1 à 2, et $A^{\ominus}$ est un anion ayant les formules suivantes : $SCN^{\ominus}$, $R_3SO_3^{\ominus}$ où $R_3$ est un radical alkyle ou alcényle en $C_6$-$C_9$ et la somme des atomes de carbone de $R_1$ et $R_3$ est au moins égale à 21 ;

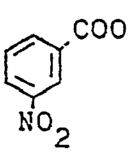 ; 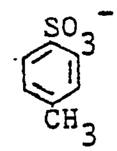 ; 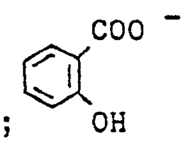 ; 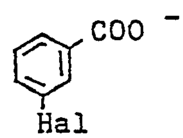 ; 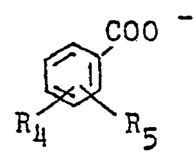

où Hal désigne le chlore ou le brome, $R_4$ un radical alkyle en $C_1$-$C_5$, alcényle en $C_2$-$C_5$ ou alcoxy en $C_1$-$C_5$ sur les positions 3, 4, 5 ou 6 et $R_5$ désigne l'hydrogène ou le radical hydroxy sur les positions 2 et 3 par rapport au groupe carboxyle, et

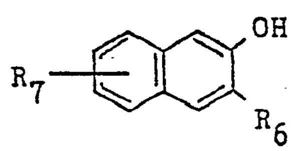

où $R_6$ est $COO^{\ominus}$ ou $SO_3^{\ominus}$ et $R_7$ est l'hydrogène ou le radical méthyle.

3. Procédé selon la revendication 1, caractérisé en ce qu'on ajoute les composés en une concentration de 0,01 à 5 % en poids.

4. Procédé selon la revendication 1, caractérisé en ce que sont présents en outre des sels de métaux alcalins, de métaux alcalino-terreux, de métaux de transition, d'ammonium ou d'aluminium.

5. Procédé selon la revendication 1 pour réguler la mobilité de l'eau d'injection dans la récupération tertiaire du pétrole.